# EUROPÄISCHE PATENTSCHRIFT

(11) **EP 2 047 127 B1**
(45) Veröffentlichungstag und Bekanntmachung des Hinweises auf die Patenterteilung: **09.12.2009**
(21) Anmeldenummer: 06828831.5
(22) Anmeldetag: 19.10.2006
(51) Int. Cl.: F16B 41/00, F16B 43/00

(54) **KOMBINATION AUS EINER SCHRAUBE, EINER UNTERLEGSCHEIBE UND EINER HÜLSE SOWIE VERFAHREN ZUM HERSTELLEN EINER SOLCHEN KOMBINATION**
COMBINATION OF A SCREW, A WASHER AND A SLEEVE AND METHOD FOR PRODUCING SAID COMBINATION
ASSOCIATION D'UN BOULON, D'UNE RONDELLE ET D'UN MANCHON ET PROCÉDÉ DE PRODUCTION ASSOCIÉ

(43) Veröffentlichungstag der Anmeldung: 15.04.2009
(73) Patentinhaber: ElringKlinger AG, 72581 Dettingen (DE)
(72) Erfinder: AMANN, Erich, 72108 Rottenburg (DE); BÖHRINGER, Peter, 72584 Hülben (DE)
(74) Vertreter: Hörner, Andreas
(86) Internationale Anmeldenummer: PCT/EP2006/010070
(87) Internationale Veröffentlichungsnummer: WO 2008/046438

(56) Entgegenhaltungen:
- EP-A- 0 967 401
- US-A- 3 405 591
- US-A- 4 435 112
- US-A- 5 577 854

## Beschreibung

Die vorliegende Erfindung betrifft eine Kombination aus einer Schraube mit einem Schraubenkopf, einem Gewindebereich und einem zwischen dem Schraubenkopf und dem Gewindebereich angeordneten Schaftbereich, dessen Außendurchmesser kleiner ist als der Außendurchmesser des Gewindebereichs, einer Unterlegscheibe mit einer Durchtrittsöffnung, deren Durchmesser kleiner ist als der Außendurchmesser des Gewindebereichs, und einer Hülse, deren Innendurchmesser größer ist als der Außendurchmesser des Gewindebereichs..

Eine solche Kombination ist aus der DE 199 24 502 C2 bekannt. Bei dieser bekannten Kombination ist die Hülse durch eine Klebe-, Schweiß- oder Lötverbindung an der Unterlegscheibe befestigt. Die Unterlegscheibe und/oder die Hülse sind geschlitzt, damit sich die Hülse und/oder die Unterlegscheibe beim Überstreifen der durch die Unterlegscheibe gebildeten Engstelle über den Gewindebereich der Schraube aufweiten und wieder zurückschnappen, nachdem die Engstelle vollständig über den Gewindebereich geschoben ist. Nach dem Zurückschnappen sind die Unterlegscheibe und die Hülse unverlierbar an der Schraube gehalten.

Eine weitere Kombination aus einer Schraube und einer Unterlegscheibe sowie einer Hülse, die unverlierbar an der Schraube gehalten sind, ist aus der DE 195 10 349 A1 bekannt. Bei dieser Kombination weist die Unterlegscheibe eine tiefgezogene Öffnung mit einem Kragen auf, der von der Hülse klemmend umschlossen wird. Zur Klemmung des Kragens der Unterlegscheibe muss die Innenseite der Hülse an ihrem schraubenkopfseitigen Ende mit einer Fase versehen werden. Der Halt der Hülse an der Unterlegscheibe, der nur durch die Klemmwirkung des in die Hülse hineinragenden Kragens bewirkt wird, ist nicht besonders sicher.

Die EP 0 967 401 A offenbart eine Kombination aus einer Schraube, einer Unterlegscheibe und einer Hülse gemäß dem Oberbegriff von Anspruch 1.

Der vorliegenden Erfindung liegt die Aufgabe zugrunde, eine Kombination der eingangs genannten Art zu schaffen, welche einfach herstellbar ist und dennoch einen sicheren Halt der Hülse und der Unterlegscheibe an der Schraube gewährleistet.

Diese Aufgabe wird bei einer Kombination mit den Merkmalen des Oberbegriffs von Anspruch 1 erfindungsgemäß dadurch gelöst, dass die Hülse mindestens einen Vorsprung aufweist, der in eine an der Unterlegscheibe vorgesehene Ausnehmung eingreift, wobei die Hülse so mit der Unterlegscheibe verpresst ist, dass die Hülse und die Unterlegscheibe miteinander verbunden und unverlierbar an der Schraube gehalten sind.

Der vorliegenden Erfindung liegt somit das Konzept zugrunde, die Hülse und die Unterlegscheibe durch den Vorsprung der Hülse und die Ausnehmung der Unterlegscheibe sowie die Verpressung von Hülse und Unterlegscheibe so miteinander zu verzahnen, dass die Hülse sicher an der Unterlegscheibe festgelegt und dadurch sowohl die Hülse als auch die Unterlegscheibe sicher unverlierbar an der Schraube gehalten sind.

Die Verpressung von Hülse und Unterlegscheibe wird dabei vorzugsweise erst dann durchgeführt, wenn die Schraube in die Hülse und eine Unterlegscheiben-Vorform eingesteckt worden ist, so dass es nicht erforderlich ist, eine geschlitzte Hülse und/oder eine geschlitzte Unterlegscheibe zu verwenden, sondern eine schlitzfreie Hülse und eine schlitzfreie Unterlegscheibe benutzt werden können.

Bei einer bevorzugten Ausgestaltung der Erfindung ist vorgesehen, dass die Hülse mindestens zwei Vorsprünge aufweist, die jeweils in eine an der Unterlegscheibe vorgesehene Ausnehmung eingreifen.

Hierdurch wird der Halt zwischen der Hülse und der damit verpressten Unterlegscheibe verbessert.

Eine weitere Verbesserung des Halts zwischen der Unterlegscheibe und der Hülse wird erreicht, wenn die Hülse mindestens drei Vorsprünge aufweist, die jeweils in eine an der Unterlegscheibe vorgesehene Ausnehmung eingreifen.

Die Vorsprünge folgen dabei vorzugsweise im wesentlichen äquidistant längs der Umfangsrichtung der Hülse aufeinander.

Der mindestens eine Vorsprung der Hülse ist vorzugsweise im wesentlichen parallel zu der Längsachse der Hülse ausgerichtet.

Um die Unterlegscheibe an den Schraubenkopf der Schraube anlegen zu können, ist es von Vorteil, wenn der mindestens eine Vorsprung an einem schraubenkopfseitigen Ende der Hülse angeordnet ist.

Bei einer bevorzugten Ausgestaltung der Erfindung ist vorgesehen, dass die mindestens eine Ausnehmung berandende Bereiche der Unterlegscheibe, die insbesondere als Stege ausgebildet sein können, im mit der Hülse verpressten Zustand im wesentlichen senkrecht zur Längsachse der Hülse ausgerichtet sind. Dadurch wird erreicht, dass die Unterlegscheibe im mit der Hülse verpressten Zustand im wesentlichen eben ausgebildet ist.

Die mindestens eine Ausnehmung der Unterlegscheibe mündet vorzugsweise in die Durchtrittsöffnung der Unterlegscheibe.

Die Durchtrittsöffnung der Unterlegscheibe ist vorzugsweise im wesentlichen mittig an der Unterlegscheibe angeordnet.

Bei einer bevorzugten Ausgestaltung der Erfindung ist die Unterlegscheibe aus einer Unterlegscheiben-Vorform gebildet, bei welcher die mindestens eine Ausnehmung der Unterlegscheibe berandende Bereiche der Unterlegscheibe, die insbesondere als Stege ausgebildet sein können, schräg zur Mittelachse der Unterlegscheibe ausgerichtet sind.

Dabei kann insbesondere vorgesehen sein, dass die die mindestens eine Ausnehmung der Unterlegscheibe berandenden Bereiche der Unterlegscheiben-Vorform eine Vorform-Durchtrittsöffnung definieren, deren Durchmesser größer ist als der Durchmesser der Durchtrittsöffnung der Unterlegscheibe im mit der Hülse verpressten Zustand.

Vorzugsweise ist vorgesehen, dass der Durchmesser der Vorform-Durchtrittsöffnung so groß ist, dass der Gewindebereich der Schraube durch die Vorform-Durchtrittsöffnung hindurch bewegbar ist. Hierdurch wird es möglich, die Unterlegscheiben-Vorform mit der Hülse so zusammenzustecken, dass der mindestens eine Vorsprung der Hülse in die mindestens eine Ausnehmung der Unterlegscheiben-Vorform eingreift, anschließend den Gewindebereich der Schraube durch die Vorform-Durchtrittsöffnung hindurch zu bewegen und dann die Hülse so mit der Unterlegscheiben-Vorform zu verpressen, dass die Hülse und die aus der Unterlegscheiben-Vorform durch die Verpressung gebildete Unterlegscheibe miteinander verbunden und unverlierbar an der Schraube gehalten sind.

Die vorliegende Erfindung betrifft ferner ein Verfahren zum Herstellen einer Kombination aus einer Schraube mit einem Schraubenkopf, einem Gewindebereich und einem zwischen dem Schraubenkopf und dem Gewindebereich angeordneten Schaftbereich, dessen Außendurchmesser kleiner ist als der Außendurchmesser des Gewindebereichs,
einer Unterlegscheibe mit einer Durchtrittsöffnung, deren Durchmesser kleiner ist als der Außendurchmesser des Gewindebereichs, und
einher Hülse, deren Innendurchmesser größer ist als der Außendurchmesser des Gewindebereichs.

Der vorliegenden Erfindung liegt die weitere Aufgabe zugrunde, ein Verfahren zum Herstellen einer solchen Kombination zu schaffen, welches einfach durchführbar ist und zu einem sicheren Halt der Hülse und der Unterlegscheibe untereinander und an der Schraube führt.

Diese Aufgabe wird erfindungsgemäß durch ein Verfahren gelöst, das folgende Verfahrensschritte umfasst:
- Bereitstellen einer Unterlegscheiben-Vorform mit einer Vorform-Durchtrittsöffnung und mindestens einer Ausnehmung;
- Bereitstellen einer Hülse mit mindestens einem Vorsprung;
- Anordnen der Hülse an der Unterlegscheiben-Vorform derart, dass der mindestens eine Vorsprung der Hülse in die mindestens eine Ausnehmung der Unterlegscheiben-Vorform eingreift;
- Einstecken der Schraube in die Unterlegscheiben-Vorform und die Hülse derart, dass die Vortorm-Durchtrittsöffnung der Unterlegscheiben-Vorform im Bereich des Schaftbereichs zu liegen kommt;
- Verpressen der Hülse mit der Unterlegscheiben-Vorform derart, dass die Unterlegscheiben-Vorform zu einer Unterlegscheibe verformt wird, deren Durchtrittsöffnung einen Durchmesser aufweist, der kleiner ist als der Außendurchmesser des Gewindebereichs der Schraube, und dass die Hülse und die Unterlegscheibe miteinander verbunden und unverlierbar an der Schraube gehalten sind.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen Schnitt durch eine Baugruppe aus einem ersten Bauteil und einem zweiten Bauteil, die mittels einer Schraube mit unverlierbar an der Schraube gehaltener Unterlegscheibe und Hülse sowie mittels Elastomerelemehten schwingungsentkoppelt aneinander festgelegt sind;
- Fig. 2: einen schematischen Längsschnitt durch die Schraube mit Unterlegscheibe, Hülse und Elastomerelement aus Fig. 1;
- Fig. 3: eine Draufsicht von oben auf die Schraube mit Unterlegscheibe, Hülse und Elastomerelement aus Fig. 2;
- Fig. 4: eine schematische Explosionsdarstellung der Schraube, einer Unterlegscheiben-Vorform, der Hülse und des Elastomerelements vor dem Zusammenbau dieser Elemente;
- Fig. 5: eine schematische Draufsicht von oben auf die Unterlegscheiben-Vorform aus Fig. 4;
- Fig. 6: einen schematischen Längsschnitt durch die mit der Hülse zusarnmengesteckte Unterlegscheiben-Vorform; und
- Fig. 7: eine schematische perspektivische Darstellung der Unterlegscheibe und der Hülse, nachdem die Unterlegscheibe und die Hülse miteinander verpresst worden sind.

Gleiche oder funktional äquivalente Element sind in allen Figuren mit denselben Bezugszeichen bezeichnet.

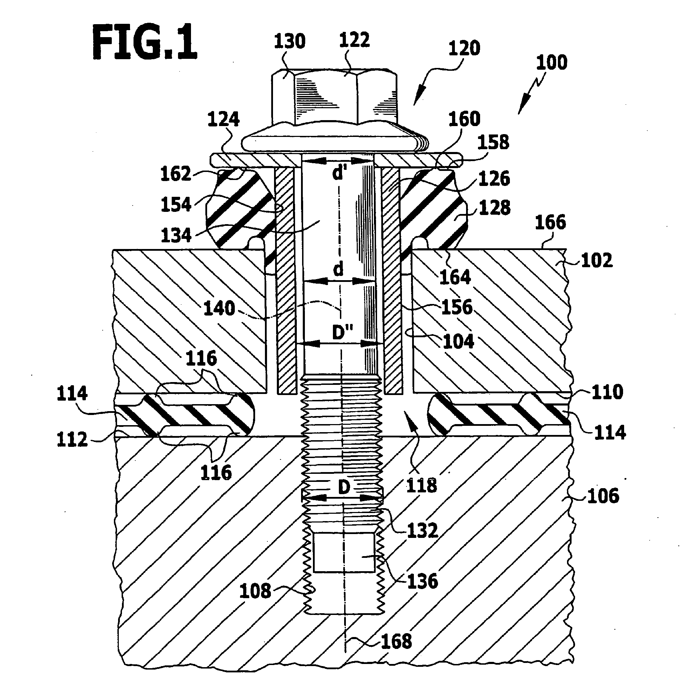

Eine in Fig. 1 ausschnittsweise dargestellte, als Ganzes mit 100 bezeichnete Baugruppe umfasst ein erstes Bauteil 102 mit einer im wesentlichen zylindrischen Durchtrittsöffnung 104, ein zweites Bauteil 106 mit einem Gewindesackloch 108, ein zwischen einer Unterseite 110 des ersten Bauteils 102 und einer Oberseite 112 des zweiten Bauteils 106 angeordnetes elastomeres Dichtelement 114 mit Dichtlippen 116 und einer Durchtrittsöffnung 118 im Bereich des Gewindesackloches 108 sowie eine Kombination 120 aus einer Schraube 122, einer unverlierbar an der Schraube 122 gehaltenen Unterlegscheibe 124, einer unverlierbar an der Schraube 122 gehaltenen hohlzylindrischen Hülse 126 und einem einen schraubenkopfseitigen Endbereich der Hülse 126 ringförmig umgebenden, ringförmigen Element 128.

Die Schraube 122 umfasst einen Schraubenkopf 130, der beispielsweise als ein Sechskant-Schraubenkopf ausgebildet sein kann, einen Gewindebereich 132 mit einem Außendurchmesser D, einen zwischen dem Gewindebereich 132 und dem Schraubenkopf 130 angeordneten Schaftbereich 134, dessen Außendurchmesser d kleiner ist als der Außendurchmesser D des Gewindebereichs, und einen sich an die dem Schraubenkopf 130 abgewandte Seite des Gewindebereichs 132 anschließenden Endbereich 136, dessen Außendurchmesser kleiner ist als der Außendurchmesser D des Gewindebereichs 132 und kleiner ist als der Außendurchmesser d des Schaftbereichs 134 der Schraube 122.

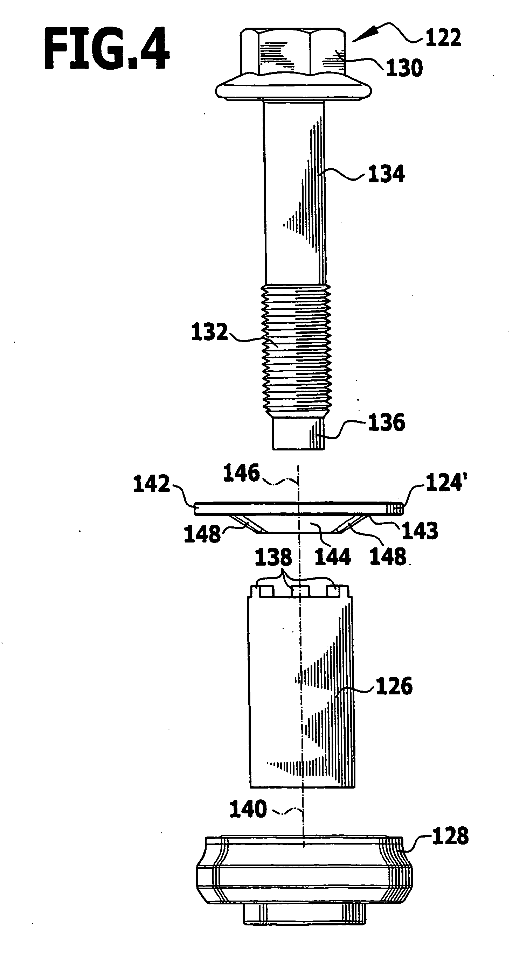

Die Hülse 126 ist, wie am besten aus Fig. 4 zu ersehen ist, hohlzylindrisch ausgebildet und an ihrem schraubenkopfseitigen Ende mit mehreren, beispielsweise drei, Vorsprüngen 138 versehen, die sich parallel zur Längsachse 140 der Hülse 126 erstrecken und in der Umfangsrichtung der Hülse 126 im wesentlichen äquidistant voneinander beabstandet sind.

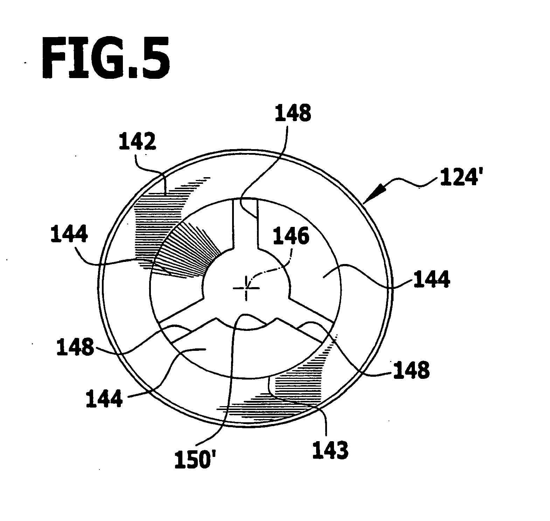

Die Unterlegscheibe 124 ist aus einer in den Fig. 4 und 5 dargestellten Unterlegscheiben-Vorform 124' gebildet.

Die Unterlegscheiben-Vorform 124' umfasst einen ebenen ringförmigen Bereich 142, von dessen radial innenliegendem Rand 143 ausgehend mehrere, beispielsweise drei, Stege 144 radial nach innen und schräg zur Mittelachse 146 der Unterlegscheiben-Vorform 124', vorzugsweise unter einem Winkel von ungefähr 30° bis ungefähr 60° zur Mittelachse 146, abstehen. Diese Stege 144 überstreichen jeweils im wesentlichen einander gleiche Umfangswinkel, wobei längs des Umfangs der Unterlegscheiben-Vorform 124' aufeinanderfolgende Stege 144 durch jeweils eine in radialer Richtung verlaufende Ausnehmung 148 voneinander getrennt sind.

Alle der, beispielsweise drei, Ausnehmungen 148 münden in eine im wesentlichen kreisförmige, mittige Durchtrittsöffnung 150 der Unterlegscheiben-Vorform 124'.

Um aus der Unterlegscheiben-Vorform 124' die Unterlegscheibe 124 herzustellen und zugleich die Unterlegscheibe 124 und die Hülse 126 unverlierbar an der Schraube 122 zu sichern, wird wie folgt vorgegangen:

Die Hülse 126 wird so an der Unterlegscheiben-Vorform 124' angeordnet, dass die Längsachse 140 der Hülse 126 und die Mittelachse 146 der Unterlegscheiben-Vorform 124' zusammenfallen und die Vorsprünge 138 am schraubenkopfseitigen Ende der Hülse 126 in jeweils eine Ausnehmung 148 der Unterlegscheiben-Vorform 124' eingreifen.

Um dies zu ermöglichen, ist die Ausdehnung der Vorsprünge 138 in der Umfangsrichtung der Hülse 126 geringfügig kleiner als die Ausdehnung der Ausnehmungen 148 in der Umfangsrichtung der Unterlegscheiben-Vorform 124'.

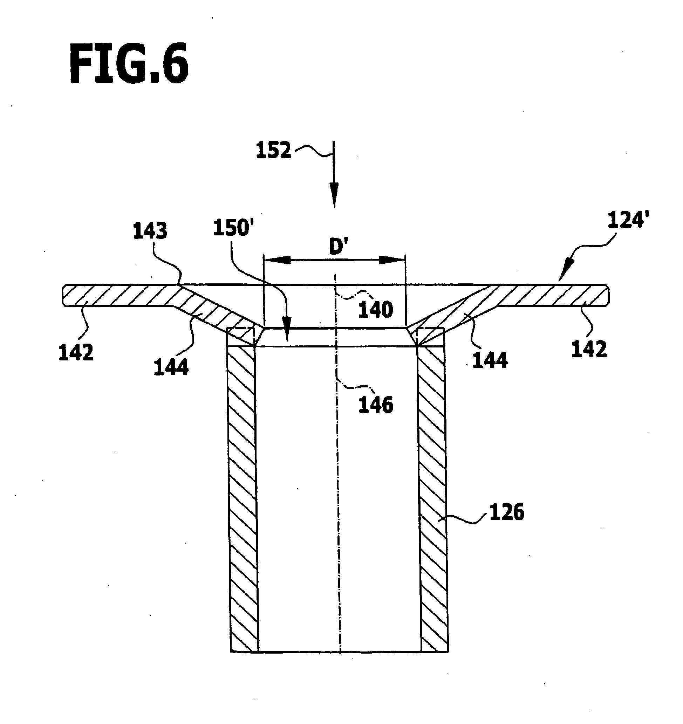

Durch das Zusammenstecken der Hülse 126 mit der Unterlegscheiben-Vorform 124' entsteht die im Längsschnitt in Fig. 6 dargestellte Anordnung aus Unterlegscheiben-Vorform 124' und Hülse 126, in welcher die mittige Durchtrittsöffnung 150 der Unterlegscheiben-Vorform 124' einen Durchmesser D' aufweist, welcher größer ist als der Außendurchmesser D des Gewindebereichs 132 der Schraube 122.

Die Schraube 122 kann daher mit dem Gewindebereich 132 voran in Richtung des Pfeils 152 in Fig. 6 in die Unterlegscheiben-Vorform 124' und die damit verbundene Hülse 126 eingesteckt werden, und zwar derart, dass die Durchtrittsöffnung 150 der Unterlegscheiben-Vorform 124' im Bereich des Schaftbereichs 134 der Schraube 122 zu liegen kommt.

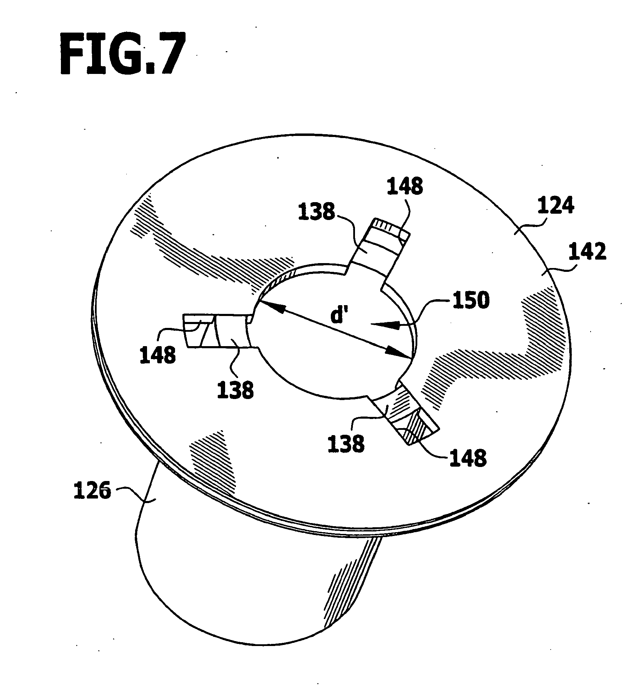

Anschließend werden die Hülse 126 und die Unterlegscheiben-Vorform 124' derart miteinander verpresst, dass die Stege 144 in die Ebene des ebenen ringförmigen Bereichs 142 der Unterlegscheiben-Vorform 124' hochgebogen werden und die Unterlegscheibe 124 entsteht (siehe Fig. 7), welche im wesentlichen eben ausgebildet ist und eine Durchtrittsöffnung 150 mit einem Durchmesser d' aufweist, der geringfügig größer ist als der Außendurchmesser d des Schaftbereichs 134 der Schraube 122 und kleiner ist als der Außendurchmesser D des Gewindebereichs 132 der Schraube 122, so dass der Bereich der Durchtrittsöffnung 150 der Unterlegscheibe 124 eine Engstelle bildet, durch welche der Gewindebereich 132 der Schraube 122 nicht mehr hindurchbewegt werden kann.

Nach dem Verpressen der Hülse 126 mit der Unterlegscheibe 124, durch welche die Hülse 126 und die Unterlegscheibe 124 form- und/oder kraftschlüssig miteinander verbunden sind, ist somit die Einheit aus der Hülse 126 und der Unterlegscheibe 124 unverlierbar an der Schraube 122 gehalten.

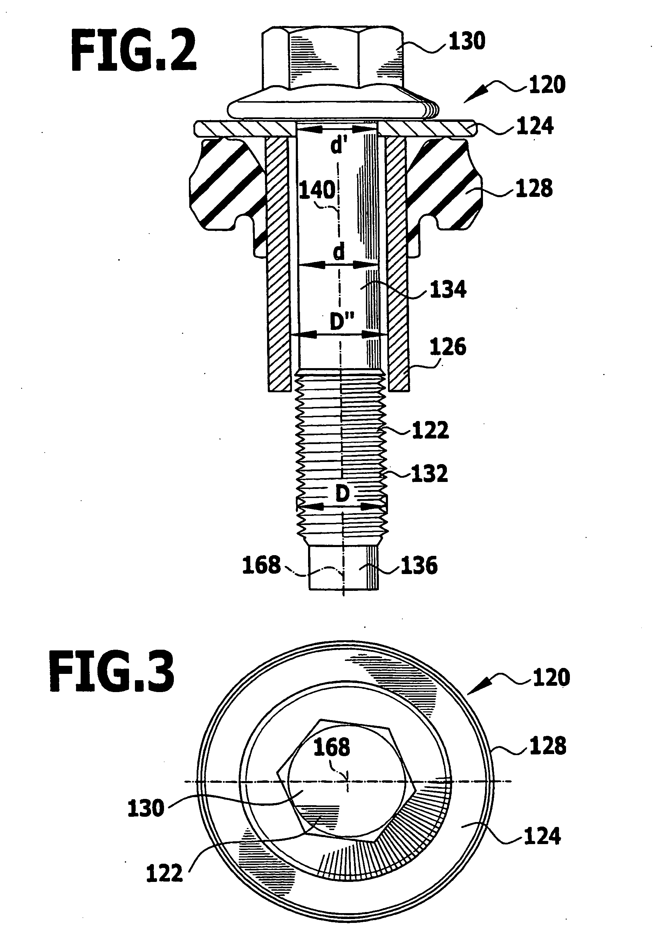

Anschließend wird auf die Außenseite der Hülse 126 das ringförmige Element 128 aufgeschoben, welches vorzugsweise aus einem elastischen Material, beispielsweise aus einem Elastomermaterial, gebildet ist (siehe Fig. 2 und 3).

Die Hülse 126, die Unterlegscheibe 124 und die Schraube 122 sind vorzugsweise aus einem metallischen Material, insbesondere aus einem Stahlmaterial, gebildet.

Wie am besten aus Fig. 1 zu ersehen ist, weist das ringförmige Element 128 eine innere Anlagefläche 154 zur Anlage an der Außenseite 156 der Hülse 126, eine schraubenkopfseitige Anlagefläche 158 mit einer Dichtlippe 160 zur Anlage an der Unterseite 162 der Unterlegscheibe 124 und eine dem Schraubenkopf 130 abgewandte Bauteilanlagefläche 164 zur Anlage an einer Oberseite 166 des ersten Bauteils 102 auf.

Das ringförmige Element 128 kann in Presspassung oder aber auch lose auf die Außenseite 156 der Hülse 126 aufgeschoben sein.

Im montierten Zustand der Baugruppe 100, wie er in Fig. 1 dargestellt ist, ist das Außengewinde des Gewindebereichs 132 der Schraube 122 in das Innengewinde des Gewindesackloches 108 an dem zweiten Bauteil 106 eingedreht. Die Schraube 122 und die Hülse 126 erstrecken sich durch die Durchtrittsöffnung 104 an dem ersten Bauteil 102 hindurch.

Die Hülse 126 und die Unterlegscheibe 124 stützen sich über das elastische ringförmige Element 128 an dem ersten Bauteil 102 ab, so dass die Hülse 126, die Unterlegscheibe 124 und die Schraube 122 schwingungsmäßig von dem ersten Bauteil 102 entkoppelt sind.

Durch das zwischen dem ersten Bauteil 102 und dem zweiten Bauteil 106 angeordnete elastomere Dichtelement 114 wird ferner eine Schwingungsentkopplung zwischen den beiden Bauteilen 102 und 106 erzielt.

Im montierten Zustand, in dem die Oberseite der Unterlegscheibe 124 an dem Schraubenkopf 130 anliegt, erstreckt sich die Hülse 126 nach unten bis in den Bereich des Gewindebereichs 132, dessen Außendurchmesser D nur geringfügig kleiner ist als der Innendurchmesser D" der Hülse 126, so dass gewährleistet ist, dass die Längsachse 140 der Hülse 126 im wesentlichen parallel zur Längsachse 168 der Schraube 122 ausgerichtet ist.

## Patentansprüche

1. Kombination aus einer Schraube (122) mit einem Schraubenkopf (130), einem Gewindebereich (132) und einem zwischen dem Schraubenkopf (130) und dem Gewindebereich (132) angeordneten Schaftbereich, (134), dessen Außendurchmesser (d) kleiner ist als der Außendurchmesser (D) des Gewindebereichs (132),
einer Unterlegscheibe (124) mit einer Durchtrittsöffnung (150), deren Durchmesser (d') kleiner ist als der Außendurchmesser (D) des Gewindebereichs (132), und
einer Hülse (126), deren Innendurchmesser (D") größer ist als der Außendurchmesser (D) des Gewindebereichs (132),
**dadurch gekennzeichnet,**
**dass** die Hülse (126) mindestens einen Vorsprung (138) aufweist, der in eine an der Unterlegscheibe (124) vorgesehene Ausnehmung (148) eingreift, wobei die Hülse (126) so mit der Unterlegscheibe (124) verpresst ist, dass die Hülse (126) und die Unterlegscheibe (124) miteinander verbunden und unverlierbar an der Schraube (122) gehalten sind.

2. Kombination nach Anspruch 1, **dadurch gekennzeichnet, dass** die Hülse (126) mindestens zwei Vorsprünge (138) aufweist, die jeweils in eine an der Unterlegscheibe (124) vorgesehene Ausnehmung (148) eingreifen.

3. Kombination nach Anspruch 2, **dadurch gekennzeichnet, dass** die Hülse (126) mindestens drei Vorsprünge (138) aufweist, die jeweils in eine an der Unterlegscheibe (124) vorgesehene Ausnehmung (148) eingreifen.

4. Kombination nach einem der Ansprüche 2 oder 3, **dadurch gekennzeichnet, dass** die Vorsprünge (138) im wesentlichen äquidistant längs der Umfangsrichtung der Hülse (126) aufeinanderfolgen.

5. Kombination nach einem der Ansprüche 1 bis 4, **dadurch gekennzeichnet, dass** der mindestens eine Vorsprung (138) im wesentlichen parallel zu der Längsachse (140) der Hülse (126) ausgerichtet ist.

6. Kombination nach einem der Ansprüche 1 bis 5, **dadurch gekennzeichnet, dass** der mindestens eine Vorsprung (138) an einem schraubenkopfseitigen Ende der Hülse (126) angeordnet ist.

7. Kombination nach einem der Ansprüche 1 bis 6, **dadurch gekennzeichnet, dass** die mindestens eine Ausnehmung (148) berandende Bereiche (144) der Unterlegscheibe (124) im mit der Hülse verpressten Zustand im wesentlichen senkrecht zur Längsachse (140) der Hülse (126) ausgerichtet sind.

8. Kombination nach einem der Ansprüche 1 bis 7, **dadurch gekennzeichnet, dass** die mindestens eine Ausnehmung (148) der Unterlegscheibe (124) in die Durchtrittsöffnung (150) der Unterlegscheibe (124) mündet.

9. Kombination nach einem der Ansprüche 1 bis 8, **dadurch gekennzeichnet, dass** die Durchtrittsöffnung (150) der Unterlegscheibe (124) im wesentlichen mittig an der Unterlegscheibe (124) angeordnet ist.

10. Kombination nach Anspruch 9, **dadurch gekennzeichnet, dass** die Unterlegscheibe (124) aus einer Unterlegscheiben-Vorform (124') gebildet ist, bei welcher die mindestens eine Ausnehmung (148) der Unterlegscheibe (124) berandende Bereiche (144) der Unterlegscheibe (124) schräg zur Mittelachse (146) der Unterlegscheibe (124) ausgerichtet sind.

11. Kombination nach Anspruch 10, **dadurch gekennzeichnet, dass** die die mindestens eine Ausnehmung (148) der Unterlegscheibe (124) berandenden Bereiche (144) der Unterlegscheiben-Vorform (124') eine Vorform-Durchtrittsöffnung (150') definieren, deren Durchmesser (D') größer ist als der Durchmesser (d') der Durchtrittsöffnung (150) der Unterlegscheibe (124) im mit der Hülse (126) verpressten Zustand.

12. Kombination nach Anspruch 11, **dadurch gekennzeichnet, dass** der Gewindebereich (132) der Schraube (122) durch die Vorform-Durchtrittsöffnung (150') hindurch bewegbar ist.

13. Verfahren zum Herstellen einer Kombination (120) aus einer Schraube (122) mit einem Schraubenkopf (130), einem Gewindebereich (132) und einem zwischen dem Schraubenkopf (130) und dem Gewindebereich (132) angeordneten Schaftbereich (134), dessen Außendurchmesser (d) kleiner ist als der Außendurchmesser (D) des Gewindebereichs (132), einer Unterlegscheibe (124) mit einer Durchtrittsöffnung (150), deren Durchmesser (d') kleiner ist als der Außendurchmesser (D) des Gewindebereichs (132), und
einer Hülse, deren Innendurchmesser (D") größer ist als der Außendurchmesser (D) des Gewindebereichs (132),
umfassend folgende Verfahrensschritte:
- Bereitstellen einer Unterlegscheiben-Vorform (124') mit einer Vorform-Durchtrittsöffnung (150') und mindestens einer Ausnehmung (148);
- Bereitstellen einer Hülse (126) mit mindestens einem Vorsprung (138);
- Anordnen der Hülse (126) an der Unterlegscheiben-Vorform (124') derart, dass der mindestens eine Vorsprung (138) der Hülse (126) in die mindestens eine Ausnehmung (148) der Unterlegscheiben-Vorform (124') eingreift;
- Einstecken der Schraube (122) in die Unterlegscheiben-Vorform (124') und die Hülse (126) derart, dass die Vorform-Durchtrittsöffnung (150) der Unterlegscheiben-Vorform (124') im Bereich des Schaftbereichs (134) zu liegen kommt;
- Verpressen der Hülse (126) mit der Unterlegscheiben-Vortorm (124') derart, dass die Unterlegscheiben-Vorform (124') zu einer Unterlegscheibe (124) verformt, wird, deren Durchtrittsöffnung (150) einen Durchmesser (d') aufweist, der kleiner ist als der Außendurchmesser (D) des Gewindebereichs (132) der Schraube (122), und dass die Hülse (126) und die Unterlegscheibe (124) miteinander verbunden und unverlierbar an der Schraube (122) gehalten sind.

## Claims

1. A combination of a screw member (122) comprising a screw head
(130), a threaded portion (132) and a shank portion (134) which is arranged between the screw head (130) and the threaded portion (132) and has an external diameter (d) that is smaller than the external diameter (D) of the threaded portion (132),
a washer (124) incorporating a passage opening (150) the diameter (d') of which is smaller than the external diameter (D) of the threaded portion (132), and
a sleeve (126), the internal diameter (D") of which is greater than the external diameter (D) of the threaded portion (132),
**characterised in that**
the sleeve (126) has at least one projection (138) which engages in a recess (148) provided in the washer (124), wherein the sleeve (126) is pressed against the washer (124) in such a manner that the sleeve (126) and the washer (124) are connected together and held captive on the screw member (122).

2. A combination in accordance with Claim 1, **characterised in that** the sleeve (126) has at least two projections (138) which engage in a respective recess (148) provided in the washer (124).

3. A combination in accordance with Claim 2, **characterised in that** the sleeve (126) has at least three projections (138) which engage in a respective recess (148) provided in the washer (124).

4. A combination in accordance with Claim 2 or 3, **characterised in that** the projections (138) succeed one another with substantially equal spacings around the periphery of the sleeve (116).

5. A combination in accordance with any of claims 1 to 4, **characterised in that** the at least one projection (138) is aligned substantially parallel to the longitudinal axis (140) of the sleeve (126).

6. A combination in accordance with any of claims 1 to 5, **characterised in that** the at least one projection (138) is arranged at a screw head end of the sleeve (126).

7. A combination in accordance with any of claims 1 to 6, **characterised in that** the regions (144) of the washer (124) bounding the at least one recess (138) are oriented substantially perpendicularly to the longitudinal axis (140) of the sleeve (126) when in the state where it is pressed against the sleeve.

8. A combination in accordance with any of claims 1 to 7, **characterised in that** the at least one recess (148) in the washer (124) opens into the passage opening (150) in the washer (124).

9. A combination in accordance with any of claims 1 to 8, **characterised in that** the passage opening (150) in the washer (124) is arranged substantially centrally of the washer (124).

10. A combination in accordance with Claim 9, **characterised in that** the washer (124) is formed from a washer pre-form (124') in which the regions (144) of the washer (124) bounding the at least one recess (148) in the washer (124) are oriented at an angle with respect to the central axis (146) of the washer (124).

11. A combination in accordance with claim 10, **characterised in that** the regions (144) of the washer pre-form (124') bounding the at least one recess (148) in the washer (124) define a passage opening (150') in the pre-form, the diameter (D') of which is greater than the diameter (d') of the passage opening (150) in the washer (124) when in the state where it is pressed against the sleeve (126).

12. A combination in accordance with Claim 11, **characterised in that** the threaded portion (132) of the screw member (122) is movable through the passage opening (150') in the pre-form.

13. A method of making a combination (120) of a screw member (122) comprising a screw head (130), a threaded portion (132) and a shank portion (134) which is arranged between the screw head (130) and the threaded portion (132) and has an external diameter (d) that is smaller than the external diameter (D) of the threaded portion (132),
a washer (124) incorporating a passage opening (150) the diameter (d') of which is smaller than the external diameter (D) of the threaded portion (132), and
a sleeve the internal diameter (D") of which is greater than the external diameter (D) of the threaded portion (132),
comprising the following method steps:
- providing a washer pre-form (124') incorporating a passage opening (150') in the pre-form and at least one recess (148);
- providing a sleeve (126) having at least one projection (138);
- arranging the sleeve (126) on the washer pre-form (124') in such a manner that the at least one projection (138) of the sleeve (126) engages in the at least one recess (148) in the washer pre-form (124');
- inserting the screw member (122) into the washer pre-form (124') and the sleeve (126) in such a manner that the pre-form passage opening (150) in the washer pre-form (124') comes to rest around the shank portion (134);
- pressing the sleeve (126) against the washer pre-form (124') in such a manner that the washer pre-form (124') is deformed into a washer (124), the passage opening (150) of which has a diameter (d') which is smaller than the external diameter (D) of the threaded portion (132) of the screw member (122), and that the sleeve (126) and the washer (124) are connected together and held captive on the screw member (122).

## Revendications

1. Combinaison d'une vis (122) avec une tête de vis (130), une zone filetée (132) et une tige (134) agencée entre la tête de vis (130) et la zone filetée (132), dont le diamètre extérieur (d) est plus petit que le diamètre extérieur (D) de la zone filetée (132), avec une rondelle (124) avec une ouverture de passage (150), dont le diamètre (d') est plus petit que le diamètre extérieur (D) de la zone filetée (132), et avec un manchon (126) dont le diamètre intérieur (D") est plus grand que le diamètre extérieur (D) de la zone filetée (132), **caractérisée en ce que**
le manchon (126) présente au moins une saillie (138) qui prend dans un évidement (148) prévu au niveau de la rondelle (124), le manchon (126) étant pressé sur la rondelle (124) de telle sorte que le manchon (126) et la rondelle (124) sont reliés l'un à l'autre et maintenus de manière imperdable sur la vis (122).

2. Combinaison selon la revendication 1, **caractérisée en ce que** le manchon (126) présente au moins deux saillies (138) qui prennent respectivement dans un évidement (148) prévu au niveau de la rondelle (124).

3. Combinaison selon la revendication 2, **caractérisée en ce que** le manchon (126) présente au moins trois saillies (138) qui prennent respectivement dans un évidement (148) prévu au niveau de la rondelle (124).

4. Combinaison selon l'une quelconque des revendications 2 ou 3, **caractérisée en ce que** les saillies (138) se suivent de manière essentiellement équidistante sur le sens périphérique du manchon (126).

5. Combinaison selon l'une quelconque des revendications 1 à 4, **caractérisée en ce que** l'au moins une saillie (138) est orientée de manière essentiellement parallèle à l'axe longitudinal (140) du manchon (126).

6. Combinaison selon l'une quelconque des revendications 1 à 5, **caractérisée en ce que** l'au moins une saillie (138) est agencée à une extrémité côté tête de vis du manchon (126).

7. Combinaison selon l'une quelconque des revendications 1 à 6, **caractérisée en ce que** les zones (144) de la rondelle (124) bordant au moins un évidement (148) sont orientées à l'état pressé sur le manchon de manière essentiellement perpendiculaire à l'axe longitudinal (140) du manchon (126).

8. Combinaison selon l'une quelconque des revendications 1 à 7, **caractérisée en ce que** l'au moins un évidement (148) de la rondelle (124) débouche dans l'ouverture de passage (150) de la rondelle (124).

9. Combinaison selon l'une quelconque des revendications 1 à 8, **caractérisée en ce que** l'ouverture de passage (150) de la rondelle (124) est agencée essentiellement au milieu de la rondelle (124).

10. Combinaison selon la revendication 9, **caractérisée en ce que** la rondelle (124) est formée à partir d'une préforme de rondelle (124'), sur laquelle les zones (144) de la rondelle (124) bordant au moins un évidement (148) de la rondelle (124) sont orientées de manière oblique par rapport à l'axe médian (146) de la rondelle (124).

11. Combinaison selon la revendication 10, **caractérisée en ce que** les zones (144) de la préforme de rondelle (124') bordant l'au moins un évidement (148) de la rondelle (124) définissent une ouverture de passage de préforme (150'), dont le diamètre (D') est plus grand que le diamètre (d') de l'ouverture de passage (150) de la rondelle (124) à l'état pressé sur le manchon (126).

12. Combinaison selon la revendication 11, **caractérisée en ce que** la zone filetée (132) de la vis (122) peut être déplacée à travers l'ouverture de passage de préforme (150').

13. Procédé de production d'une combinaison (120) formée d'une vis (122) avec une tête de vis (130), une zone filetée (132) et une tige (134) agencée entre la tête de vis (130) et la zone filetée (132), dont le diamètre extérieur (d) est plus petit que le diamètre extérieur (D) de la zone filetée (132), avec une rondelle (124) avec une ouverture de passage (150), dont le diamètre (d') est plus petit que le diamètre extérieur (D) de la zone filetée (132), et avec un manchon dont le diamètre intérieur (D") est plus grand que le diamètre extérieur (D) de la zone filetée (132), comprenant les étapes de procédé suivantes consistant à :
➢ mettre à disposition une préforme de rondelle (124') avec une ouverture de passage de préforme (150') et au moins un évidement (148) ;
➢ mettre à disposition un manchon (126) avec au moins une saillie (138) ;
➢ agencer le manchon (126) au niveau de la préforme de rondelle (124') de telle sorte que l'au moins une saillie (138) du manchon (126) prend dans l'au moins un évidement (148) de la préforme de rondelle (124') ;
> enficher la vis (122) dans la préforme de rondelle (124') et le manchon (126) de telle sorte que l'ouverture de passage (150) de la préforme de rondelle (124') est placée au niveau de la tige (134) ;
> presser le manchon (126) sur la préforme de rondelle (124') de telle sorte que la préforme de rondelle (124') soit façonnée en une rondelle (124) dont l'ouverture de passage (150) présente un diamètre (d') qui est plus petit que le diamètre extérieur (D) de la zone filetée (132) de la vis (122), et ce que le manchon (126) et la rondelle (124) sont reliés l'un à l'autre et maintenus de manière imperdable sur la vis (122).
